# EUROPÄISCHE PATENTSCHRIFT

(11) **EP 2 138 289 B1**
(45) Veröffentlichungstag und Bekanntmachung des Hinweises auf die Patenterteilung: **27.04.2011**
(21) Anmeldenummer: 08011351.7
(22) Anmeldetag: 23.06.2008
(51) Int. Cl.: B28B 3/02, B28B 7/18, B28B 11/04, A01K 1/015

(54) **Verfahren zur Herstellung eines Längsspaltenrostelements**
Method for producing a longitudinally slottet grid element
Procédé de fabrication d'un élément de caillebotis à fentes longitudinales

(43) Veröffentlichungstag der Anmeldung: 30.12.2009
(73) Patentinhaber: Schwarz, Rudolf, 84543 Winhöring (DE)
(72) Erfinder: Schwarz, Rudolf, 84543 Winhöring (DE)
(74) Vertreter: Hano, Christian

(56) Entgegenhaltungen:
- DE-A1- 2 910 767
- DE-A1- 10 343 970
- JP-A- 56 129 110
- US-A- 3 455 279

## Beschreibung

Die Erfindung betrifft ein Verfahren zur Herstellung eines Längsspaltenrostelements, das mehrere im Abstand zueinander in einer Ebene angeordnete Längsbalken und mehrere im Abstand zueinander in der Ebene der Längsbalken angeordnete Querbalken aufweist, die die Längsbalken kreuzen und mit diesen ein Teil aus Beton bilden, wodurch zwischen zwei benachbarten Längsbalken und zwei benachbarten Querbalken jeweils ein Längsspalt gebildet ist, wobei wenigstens Abschnitte der Längs- und/oder Querbalken mit einem Gummibelag versehen werden.

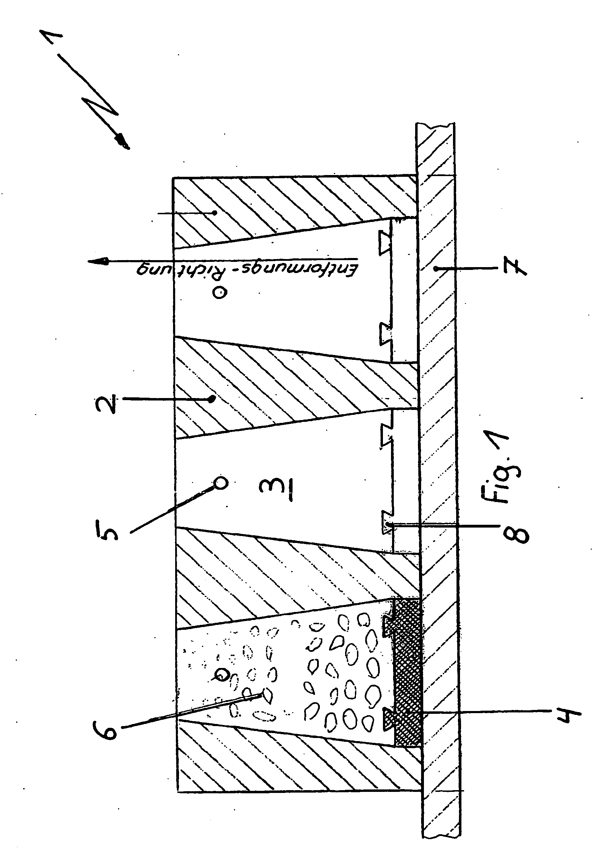

Zur Herstellung solcher Längsspaltenrostelemente ist es bekannt, eine Vorrichtung zu verwenden, wie sie schematisch in Figur 1 gezeigt ist.

Die bekannte Vorrichtung 1 weist eine Rüttelplatte 7 auf, auf die eine Gussform 2 aufgelegt ist, die durch die Gussform 2 vertikal hindurchgehende Gussräume 3 aufweist, deren Form der Form des fertigen Längsspaltenrostelements entsprechen. Wie es in Figur 1 zu erkennen ist, erweitern sich die Gussräume 3 nach unten. Zur Herstellung des Längsspaltenrostelements werden zunächst Gummibeläge 4 von unten so in die Gussräume 3 eingesetzt, dass ihre ebene Fläche bündig zur Unterseite der Gussform 2 liegt. Anschließend wird die Gussform 2 auf die Rüttelplatte 7 aufgesetzt, so dass die Gummibeläge 4 auf der Rüttelplatte 7 aufliegen. danach wird von oben Beton 6 in die Gussräume 3 eingefüllt, in denen zusätzlich Bewehrungselemente 5 angeordnet werden. Durch das Rütteln mittels der Rüttelplatte 7 wird der Beton verdichtet, wodurch Verankerungselemente 8 an den Gummibelägen 4 durch den Beton festgehalten werden. Anschließend wird die Gussform 2 von der Rüttelplatte 7 abgehoben und das Längsspaltenrostelement aus der Gussform 2 entschalt.

Bei dem bekannten Verfahren ist es erforderlich, die Gummibeläge auf die gesamte Fläche auszulegen, da sonst die restliche Betonfläche nicht mehr bearbeitet werden könnte. Außerdem würde an den Flächen, an denen keine Gummibeläge vorhanden sind, der Beton nach unten aus der Gussform fließen. Da die Gummibeläge angrenzend an die Rüttelplatte vorgesehen sind, kann die Rüttelenergie nur abgedämpft eingebracht werden. Darüber hinaus ist das Abdichten zwischen der Gussform und den Gummibelägen sehr schwierig, da der Beton nach unten leicht austreten kann. Deswegen ist eine gewünschte saubere Gummioberfläche nicht zu erreichen.

Ein Verfahren zur Herstellung vorgefertigter Längsspaltenrostelemente ist auch aus der DE 60 2004 001 123 T2 bekannt. Auch bei diesem Verfahren werden die Längsspaltenrostelemente durch Gießen von Beton in eine geeignete Gussform geformt. Anschließend wird der Beton ausgehärtet. Während des Aushärtevorgangs werden Rillen in wenigstens einem Teil der Oberfläche der Längs- oder Querbalken vorgesehen. Diese Unregelmäßigkeiten können mit einer Schutzschicht aus Epoxy oder Silikonen versehen werden.

In der JP-A-56 129110 ist eine Vorrichtung zur Herstellung eines Betonelements offenbart, das zwei im Abstand zueinander in einer Ebene angeordnete Längsbalken und mehrere im Abstand zueinander in der Ebene der Längsbalken angeordnete Querbalken aufweist, die die Längsbalken miteinander verbinden und mit diesen ein Teil aus Beton bilden. Die Vorrichtung weist eine Gussform mit der Form des Betonelements entsprechenden, oben offenen Gussräumen auf, deren Querschnitt sich nach unten verjüngt und die unten durch einen Boden geschlossen sind. Die Gussform ist auf eine Rüttelvorrichtung aufgelegt. Mittels einer Druckvorrichtung, die in die Gussräume eingreifende Vorsprünge aufweist, wird ein vertikaler Druck in Richtung der Gussform aufgebracht.

Die DE 29 10 767 A1 beschreibt ein Verfahren gemäß dem Oberbegriff des Anspruchs 1, zur Herstellung eines Längsspaltenrostelements, das mehrere im Abstand zueinander in einer Ebene angeordnete Längsbalken und mehrere im Abstand zueinander in der Ebene der Längsbalken angeordnete Querbalken aufweist, die die Längsbalken kreuzen und mit diesen ein Teil aus Beton bilden, wodurch zwischen zwei benachbarten Längsbalken und zwei benachbarten Querbalken jeweils ein Längsspalt gebildet ist Das Längsspaltenrostelement ist mit einem Überzug aus Gummi überzogen. Zur Herstellung wird auf den Überzug eine Schalung aufgelegt und anschließend Beton in die Schalung gegossen.

Aus der US-A.3 455 279 und der DE 103 43 970 ist es jeweils bekannt, nach dem Gießen des Betons Gummibeläge in den frischen Beton einzudrücken.

Der Erfindung liegt die Aufgabe zugrunde, ein Verfahren bereitzustellen, mit denen sich auf zuverlässige Weise Längsspaltenrostelemente herstellen lassen, die wenigstens teilweise mit einem fest verankerten Gummibelag versehen sind und ein ausgezeichnetes äußeres Erscheinungsbild aufweisen.

Diese Aufgabe wird durch ein Verfahren mit den Merkmalen des Patentanspruchs 1 gelöst. Vorteilhafte Weiterbildungen des erfindungsgemäßen Verfahrens sind Gegenstand der Patentansprüche 2 bis 6.

Bei dem erfindungsgemäßen Verfahren müssen die Gummibeläge einfach auf den verdichteten erdfeuchten Beton aufgelegt werden, in den sie anschließend durch die Druckvorrichtung bei gleichzeitigem Rütteln mit ihren Verankerungselementen eingedrückt werden. Das Problem des Abdichtens entfällt bei dem erfindungsgemäßen Verfahren völlig. Die Oberfläche des Längsspaltenrostelements kann sowohl vollflächig als auch nur teilweise mit dem Gummibelag belegt werden. Der verdrängte Beton fließt in die Bereiche des Längsspaltenrostelements, die nicht mit einem Gummibelag versehen sind. In diesen Bereichen kann der Beton auf die Höhe der Oberseite der Gummibeläge abgerieben werden, so dass das Längsspaltenrostelement eine ebene Oberfläche mit Flächen aus Beton oder Gummi aufweist. Außerdem gewährleistet das Ausfließen des Betons in die nicht abgedeckten Bereiche eine ausgezeichnete Kraft- und Formschlussverbindung von Gummibelag und Beton. Der Gummi kann deshalb bei Auftritt der Tiere nicht verrutschen. Größere Steine, die im Beton als Zuschlagstoffe beigesetzt werden, sinken bei dem erfindungsgemäßen Verfahren beim Rütteln nach unten, während die feinen Teile im oberen Bereich verbleiben. Deshalb wird mit dem erfindungsgemäßen Verfahren eine wesentliche bessere Verankerung der Gummibeläge gewährleistet.

Ein Ausführungsbeispiel der Erfindung wird nachstehend anhand der Zeichnungen näher erläutert, wobei
Figur 1 eine Vorrichtung zur Durchführung eines bekannten Verfahrens zur Herstellung eines Längsspaltenrostelements zeigt,
Figur 2 eine Draufsicht auf ein mit dem erfindungsgemäßen Verfahren hergestelltes Längsspaltenrostelement zeigt,
Figur 3 den Schnitt III-III des Längsspaltenrostelements von Figur 2 zeigt,
Figur 4 schematisch eine Vorrichtung zur Herstellung eines Längsspaltenrostelements mit dem erfindungsgemäßen Verfahren zeigt,
Figur 5 die Vorrichtung von Figur 4 im Bereich eines Gussraums einer Gussform zeigt.

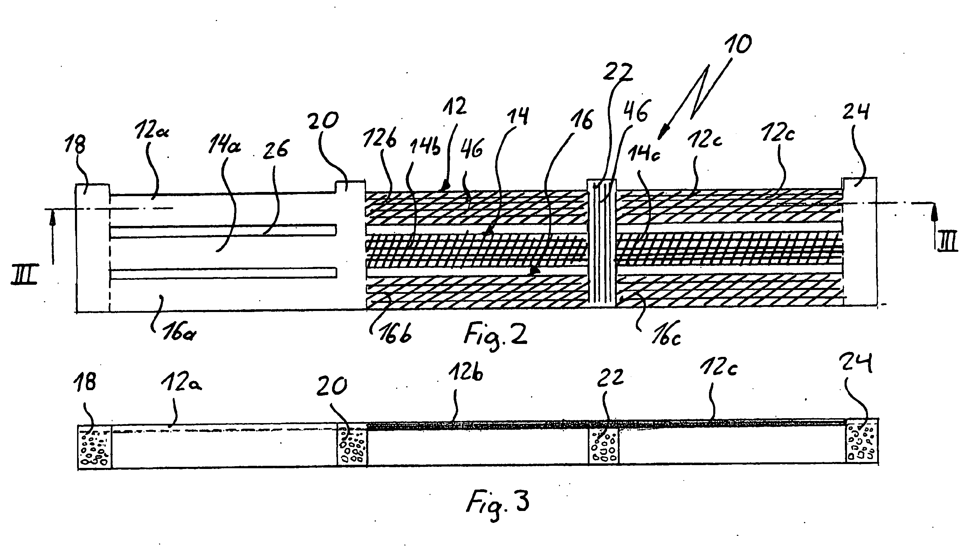

Wie es in den Figuren 2 und 3 gezeigt ist, weist ein Längsspaltenrostelement 10 z.B. drei parallele im Abstand zueinander angeordnete Längsbalken 12, 14, 16 auf. Die Längsbalken 12, 14, 16 werden von vier in gleichmäßigem Abstand zueinander angeordneten Querbalken 18, 20, 22, 24 gekreuzt, wobei die Längsbalken 12, 14, 16 und die Querbalken 18, 20, 22, 24 zusammen ein Gussteil aus Beton bilden, dessen Oberfläche in einer Ebene verläuft. Die äußeren Querbalken 18, 24 sind an den entgegen gesetzten Enden der Längsbalken 12,14,16 vorgesehen. Durch die Querbalken 18, 20, 22, 24 werden die Längsbalken 12, 14, 16 jeweils in drei gleich lange Abschnitte 12a, 12b, 12c und 14a, 14b, 14c sowie 16a, 16b, 16c unterteilt. Die Oberseite der beiden in Figur 2 rechten Abschnitte 12b, 12c und 14b, 14c sowie 16b, 16c der Längsbalken 12, 14, 16 ist jeweils durch einen Gummibelag 46 abgedeckt. Entsprechender Gummibelag 46. befindet sich auch auf der Oberseite des zwischen diesen Abschnitten angeordneten Querbalkens 22. Die restlichen Querbalken 18, 20, 24 sowie die Abschnitte 12a, 14a, 16a sind nicht mit einem Gummibelag 46 versehen, so dass ihre Oberfläche aus Beton gebildet ist, wobei die Oberfläche bündig zur Oberseite der Gummibeläge 46 verläuft.

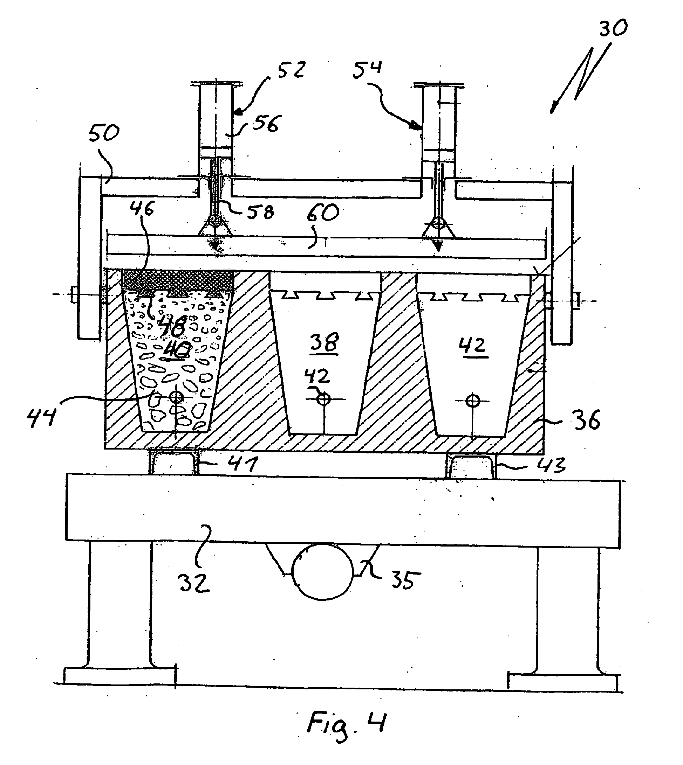

Figur 4 zeigt eine Vorrichtung 30, mit der ein Längsspaltenrostelement 10 hergestellt werden kann, wie es in Figur 2 und 3 gezeigt ist. Die Vorrichtung 30 weist einen Rütteltisch 32 mit einem Rüttelmotor 35 auf. Auf dem Rütteltisch 32 ist eine Gussform 36 angeordnet, die mehrere Gussräume mit insgesamt trapezförmigen Querschnitt aufweist, deren Form der Form des in Figur 2 und 3 gezeigten Längsspaltenrostelements 10 entspricht. Figur 4 zeigt einen Querschnitt der Gussform 36 in einem Bereich, in dem mit einem Gummibelag 46 versehene Längsbalken 12, 14, 16 geformt werden. Wie es zu erkennen ist, umfasst die Gussform 36 in diesem Bereich drei nebeneinander angeordnete Gussräume 38, 40, 42, die zur Oberseite der Gussform 36 hin offen sind und sich zur Rüttelplatte 32 hin verjüngen. Oberhalb der Gussform 36 ist eine horizontal angeordnete Druckplatte 60 parallel zur Oberseite der Gussform 36 angeordnet, die sich bevorzugt über die gesamte Gussform 36 , jedoch wenigstens über den Bereich der Gussform 36 erstreckt, in dem die Gummibeläge 46 vorgesehen werden. Die Druckplatte 60 wird von zwei pneumatischen Kolben/Zylindervorrichtungen 52, 54 in vertikaler Richtung bewegt. Die Kolben/Zylindervorrichtungen 52, 54 sind an einem Maschinengestell 50 angeordnet, wobei der Zylinder 56 jeweils fest an dem Gestell 50 angebracht ist und der vertikal bewegliche Kolben 58 mit seinem freien Ende jeweils an der Druckplatte 60 befestigt ist.

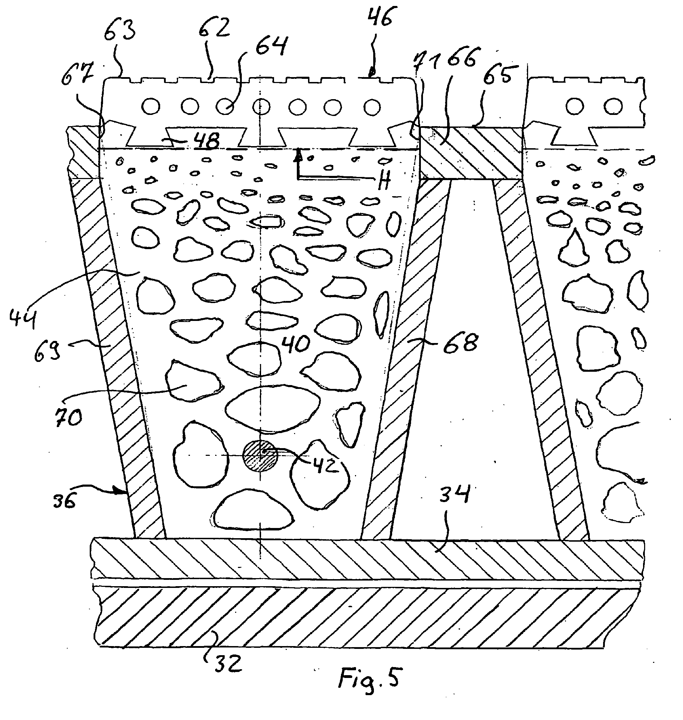

Die Konstruktion der Gussform 36 ist in Figur 5 anhand ihrer Ausbildung im Bereich des Gussraums 40 detaillierter gezeigt. Wie es zu erkennen ist, wird der Gussraum 40 seitlich von Seitenwänden 68, 69 begrenzt, die nach unten symmetrisch zueinander zulaufen, so dass sich der Gussraum 40 nach unten hin verjüngt. An seiner Unterseite ist der Gussraum 40 durch eine Bodenplatte 34 begrenzt, die auf der Rüttelplatte 32 aufliegt, wobei zwischen der Bodenplatte 34 und der Rüttelplatte 32 Auflageträger 41, 43 vorgesehen sein können, wie es in Figur 4 gezeigt ist.

Auf die obere Stirnseite der Seitenwände 68, 69 ist eine Deckplatte 66 aufgesetzt, die eine Öffnung aufweist, die durch zwei parallele vertikal verlaufende Seitenwände 67, 71 begrenzt wird, die nach unten jeweils in die innere Seitenfläche der Seitenwände 68, 69 übergehen.

Die Gummibeläge 46 werden jeweils von länglichen, plattenförmigen Gummiprofilen gebildet, deren Breite dem Abstand zwischen den Seitenwänden 67, 71 entspricht. In der Oberseite der Gummibeläge 46 sind Längsrillen 62 vorgesehen. An der Unterseite ist der Gummibelag 46 mit drei hinterschnittenen, schwalbenschwanzförmigen Verankerungselementen 48 versehen, die in Längsrichtung des Gummibelags 46 verlaufen. Im mittleren Querschnittsbereich sind mehrere, in einer horizontalen Ebene parallel zueinander in Längsrichtung des Gummibelags 46 verlaufende Durchgangsbohrungen ausgebildet, um dem Gummibelag 46 eine höhere Elastizität zu verschaffen, damit sich der Huf eines Rindes beim Auftritt in den Gummibelag 46 eindrücken kann. Als Material für den Gummibelag 46 wird vorzugsweise Naturkautschuk verwendet.

Im Inneren des Gussraums 40 ist zusätzlich eine Bewehrungsstange 42 aus Eisenangeordnet.

Zur Herstellung des Längsspaltenrostelements 10 werden die Gussräume 38, 40, 42 mit erdfeuchtem Beton 44, dem als Zuschlagstoffe Steine beigefügt sind, bis auf eine Höhe H (Figur 5) gefüllt, die unterhalb der Oberfläche 65 der Deckplatte 66 im Bereich der Deckplatte 66 liegt. Anschließend wird der Gummibelag 46 in die Öffnung zwischen den Seitenwänden 67, 71 eingepasst, bis die Verankerungselemente 48 auf dem Beton aufliegen.

Nun wird die Druckplatte 60 mittels der Kolbenzylindervorrichtungen 52, 54 nach unten gefahren und drückt den Gummibelag 46 soweit in den Beton 44, bis die Oberseite 63 des Gummibelags 46 bündig zur Oberfläche 65 der Deckplatte 66 und somit der Gussform 36 liegt. Gleichzeitig mit dem Niederpressen des Gummibelags 46 ist der Rüttelmotor 35 der Rüttelplatte 32 in Gang gesetzt, wodurch sich der Beton 44 durch das Rütteln verfestigt. Dabei werden die Verankerungselemente 48 in den Beton 44 eingedrückt und in diesem fest verankert. Anschließend wird die Druckplatte 60 nach oben gefahren. Diese Stellung ist in Figur 4 gezeigt.

Der verdrängte Beton 44 fließt während des Niederpressens der Gummibeläge 46 in die Bereiche des Längsspaltenrostelements, die nicht mit einem Gummibelag 46 bedeckt sind. Falls in diesen Bereichen der Beton 44 nach oben vorsteht, kann dieser abgerieben werden, bis er bündig mit der Oberseite der Gussform 36 ist. Für den Fall, dass in diesen Bereichen zu wenig Beton vorhanden ist, kann Beton nachgefüllt und anschließend abgerieben werden.

Bevorzugt ist die Höhe H des in die Gussräume 38, 40, 42 eingefüllten Betons so bemessen, dass die nicht mit Gummibelag 46 abgedeckten Abschnitte ausreichend mit Beton gefüllt sind, damit dieser nur noch abgerieben werden muss. Die Pressdruck der Druckplatte 60 kann durch Einstellung der Druckluft an den Kolben/Zylindervorrichtungen 52, 54 optimal eingestellt werden.

Schließlich wird die Gussform 36 um 180 Grad gedreht, so dass die Oberseite 63 der Gummibeläge 46 nach unten zeigt. Anschließend wird die Gussform 36 angehoben und das fertige Längsspaltenrostelement durch Belüftung entschalt.

Die Erfindung ist nicht auf die dargestellten Ausführungsbeispiele begrenzt. Das Längsspaltenrostelement kann beispielsweise mehr oder weniger Längsbalken und Querbalken aufweisen als in den Fig. 2 und 3 dargestellt. Es ist auch möglich, alle Abschnitte der Längsbalken mit Gummibelag abzudecken, solange gewährleistet ist, dass der verdrängte Beton ausfließen kann.

## Patentansprüche

1. Verfahren zur Herstellung eines Längsspaltenrostelements (10), das mehrere im Abstand zueinander in einer Ebene angeordnete Längsbalken (12, 14, 16) und mehrere im Abstand zueinander in der Ebene der Längsbalken (12, 14, 16) angeordnete Querbalken (18, 20, 22, 24) aufweist, die die Längsbalken (12, 14, 16) kreuzen und mit diesen ein Teil aus Beton (44) bilden, wodurch zwischen zwei benachbarten Längsbalken (12, 14, 16) und zwei benachbarten Querbalken (18, 20, 22, 24) jeweils ein Längsspalt (26) gebildet ist, **gekennzeichnet dadurch, daß**
- eine Gussform (36) mit der Form des Längsspaltenrostelements (10) entsprechenden, oben offenen Gussräumen (38, 40, 42), deren Querschnitt sich nach unten verjüngt und die unten durch einen Boden (34) geschlossen sind, auf eine Rüttelvorrichtung (32) aufgelegt wird,
- die Gussräume (38, 40, 42) bis auf eine vorher bestimmte Höhe mit Beton (44) gefüllt werden,
- Gummibeläge (46) auf den Beton (44) im Bereich vorher bestimmter Abschnitte der Quer- und Längsbalken (12, 14, 16) aufgelegt werden, wobei die Dicke der Gummibeläge (46) und die Höhe des eingefüllten Betons (44) so gewählt sind , dass sich die Oberseite des jeweiligen Gummibelags (46) oberhalb der Oberfläche der Gussform (36) befindet,
- die Gummibeläge (46) bei gleichzeitigem Rütteln der Gussform (36) mittels der Rüttelvorrichtung (32) von oben durch eine Druckvorrichtung (52, 54, 60) solange mit einem Druck belastet werden, bis sich ihre Oberseite auf Höhe der Oberfläche der Gussform (36) befindet, wobei durch die Gummibeläge (46) verdrängter Beton (44) in Gussräume (38, 40, 42) fließt, die nicht durch einen Gummibelag (46) abgedeckt sind,
- an Abschnitten der Quer- und Längsbalken (12, 14, 16), die nicht durch einen Gummibelag (46) abgedeckt sind, der Beton (44) auf die Höhe der Oberseite der Gummibeläge (46) gebracht wird,
- die Gussform (36) gedreht wird, so dass die Oberseite der Gummibeläge (46) nach unten zeigt,
- das Längsspaltenrostelement nach unten aus der Gussform (36) entschalt wird.

2. Verfahren nach Anspruch 2, **dadurch gekennzeichnet, dass** auf die Bereiche der beiden äußersten Querbalken (18, 24) kein Gummibelag (46) aufgelegt wird.

3. Verfahren nach Anspruch 1 oder 2, **dadurch gekennzeichnet, dass** auf zwei benachbarten Querbalken (18, 20) und den zwischen diesen liegenden Abschnitten (12a, 14a, 16a) der Längsbalken (12, 14, 16) kein Gummibelag (46) aufgelegt wird.

4. Verfahren nach einem der vorhergehenden Ansprüche, **dadurch gekennzeichnet, dass** die Breite der Gummibeläge (46) der Breite der Oberfläche des entsprechenden Längs- oder Querbalkens entspricht.

5. Verfahren nach einem der vorhergehenden Ansprüche, **dadurch gekennzeichnet, dass** an der Unterseite der Gummibeläge (46) hinterschnittene Verankerungselemente (48) vorgesehen sind.

6. Verfahren nach einem der vorhergehenden Ansprüche, **dadurch gekennzeichnet, dass** zur Einstellung der Fließgeschwindigkeit des Betons (44) der Druck der Druckvorrichtung (52, 54, 60) eingestellt wird.

## Claims

1. Method of producing a longitudinally slotted grid element (10) having a plurality of longitudinal beams (12, 14, 16) spaced apart from one another and being arranged in a plane and a plurality of cross beams (18, 20, 22, 24) spaced apart from one another and being arranged in the plane of the longitudinal beams (12, 14, 16), which cross beams (18, 20, 22, 24) intersect the longitudinal beams (12, 14, 16) and in combination therewith form a part made of concrete (44), whereby a longitudinal slot (26) is formed between each two adjacent longitudinal beams (12, 14, 16) and the respective two adjacent cross beams (18, 20, 22, 24),
**characterised in that**
- a casting mould (36) having casting spaces (38, 40, 42) corresponding to the shape of the longitudinally slotted grid element (10) and being open at the top is placed upon a vibrating device (32), wherein the cross section of the casting spaces (38, 40, 42) has a downward taper and the casting spaces (38, 40, 42) are closed at the bottom by a bottom plate (34),
- the casting spaces (38, 40, 42) are filled with concrete (44) up to a predetermined height,
- rubber linings (46) are placed upon the concrete (44) in the area of predetermined portions of the cross and longitudinal beams (12, 14, 16), wherein the thickness of the rubber linings (46) and the height of the filled-in concrete (44) are chosen such that the top side of the respective rubber lining (46) is positioned above the surface of the casting mould (36),
- the rubber linings (46) are loaded from above by a pressure device (52, 54, 60), while the casting mould (36) is simultaneously vibrated by means of the vibrating device (32), long enough for the top side of the rubber linings (46) being flush with the surface of the casting mould (36), wherein concrete (44) displaced by the rubber linings (46) flows into casting spaces (38, 40, 42) not covered by a rubber lining (46),
- at portions of the cross and longitudinal beams (12, 14, 16) not covered by a rubber lining (46) the concrete (44) is brought to the level of the top side of the rubber linings (46),
- the casting mould (36) is turned such that the top side of the rubber linings (46) faces downwardly,
- the longitudinally slotted grid element is removed from the mould (36) in the downward direction.

2. Method according to claim 2, **characterised in that** no rubber lining (46) is placed upon the areas of the two outer cross beams (18, 24).

3. Method according to claim 1 or 2, **characterised in that** no rubber lining (46) is placed upon two adjacent cross beams (18, 20) and upon the portions (12a, 14a, 16a) of the longitudinal beams (12, 14, 16) lying between the two adjacent cross beams (18, 20).

4. Method according to one of the preceding claims, **characterised in that** the width of the rubber linings (46) corresponds to the width of the surface of the corresponding longitudinal or cross beam.

5. Method according to one of the preceding claims, **characterised in that** undercut anchoring elements (48) are provided at the bottom side of the rubber linings (46).

6. Method according to one of the preceding claims, **characterised in that** the pressure of the pressure device (52, 54, 60) is adjusted in order to adjust the flow velocity of the concrete (44).

## Revendications

1. Procédé de fabrication d'un élément de caillebotis (10) à fentes longitudinales comportant plusieurs poutres longitudinales (12, 14, 16) disposées à distance l'une de l'autre dans un plan et plusieurs poutres transversales (18, 20, 22, 24) disposées à distance l'une de l'autre dans le plan des poutres longitudinales (12, 14, 16), qui croisent les poutres longitudinales (12, 14, 16) et forment avec celles-ci une pièce en béton (44), une fente longitudinale (26) étant ainsi formée entre deux poutres longitudinales (12, 14, 16) voisines et deux poutres transversales (18, 20, 22, 24) voisines, **caractérisé en ce que**
- on pose sur un dispositif vibrant (32) un moule de coulée (36) ayant des espaces de coulée (38, 40, 42) correspondant à la forme de l'élément de caillebotis (10) ouverts en haut, dont la section diminue en allant vers le bas et qui sont fermés en bas par un fond (34),
- on remplit lesdits espaces (38, 40, 42) avec du béton (44) jusqu'à une hauteur déterminée à l'avance,
- on pose des garnitures de caoutchouc (46) sur le béton (44), au niveau de portions déterminées à l'avance des poutres transversales et longitudinales (12, 14, 16), l'épaisseur des garnitures de caoutchouc (46) et la hauteur du béton (44) versé étant choisies de telle façon que la face supérieure de la garniture de caoutchouc (46) respective se trouve au-dessus de la surface du moule (36),
- tout en faisant vibrer le moule (36) au moyen du dispositif vibrant (32), on soumet les garnitures de caoutchouc (46) à une pression par le haut exercée par un dispositif à poussoir (52, 54, 60), jusqu'à ce que leur face supérieure se trouve à hauteur de la surface du moule (36), le béton (44) chassé par les garnitures de caoutchouc (46) s'écoulant dans des espaces (38, 40, 42) non recouverts par une garniture de caoutchouc (46),
- sur des portions des poutres transversales et longitudinales (12, 14, 16), non recouvertes par une garniture de caoutchouc (46), on amène le béton (44) à hauteur de la face supérieure des garnitures de caoutchouc (46),
- on tourne le moule (36), de sorte que la face supérieure des garnitures de caoutchouc (46) soit orientée vers le bas,
- on fait sortir l'élément de caillebotis du moule (36) vers le bas.

2. Procédé selon la revendication 2, **caractérisé en ce qu'**on ne pose pas de garniture de caoutchouc (46) sur les zones des deux poutres transversales d'extrémité (18, 24).

3. Procédé selon la revendication 1 ou 2, **caractérisé en ce qu'**on ne pose pas de garniture de caoutchouc (46) sur deux poutres transversales voisines (18, 20) ni sur les portions (12a, 14a, 16a) des poutres longitudinales (12, 14, 16) situées entre celles-ci.

4. Procédé selon l'une des revendications précédentes, **caractérisé en ce que** la largeur des garnitures de caoutchouc (46) correspond à la largeur de la surface de la poutre longitudinale ou transversale correspondante.

5. Procédé selon l'une des revendications précédentes, **caractérisé en ce que** des éléments d'ancrage (48) contre-dépouillés sont prévus sur la face inférieure des garnitures de caoutchouc (46).

6. Procédé selon l'une des revendications précédentes, **caractérisé en ce que** pour régler la vitesse d'écoulement du béton (44), on règle la pression du dispositif à poussoir (52, 54, 60).
